# FASCICULE DE BREVET EUROPEEN

(11) **EP 1 123 733 B1**
(45) Date de publication et mention de la délivrance du brevet: **23.07.2003**
(21) Numéro de dépôt: 01400369.3
(22) Date de dépôt: 12.02.2001
(51) Int. Cl.: B01J 2/12

(54) **Procédé et installation de fabrication de boulettes de fibres de bois**
Verfahren und Vorrichtung zur Herstellung von Kugeln aus Holzfasern
Process and device for preparing wood-fibres pellets

(30) Priorité: 10.02.2000 FR 0001643
(43) Date de publication de la demande: 16.08.2001
(73) Titulaire: Société d'Exploitation des Brevets Granofibre- Sebreg, 60200 Compiegne (FR)
(72) Inventeur: Masselin, Martine, 60200 Compiegne (FR)
(74) Mandataire: Intès, Didier Gérard André

(56) Documents cités:
- EP-A- 0 947 130
- US-A- 3 645 813
- US-A- 4 009 835

## Description

La présente invention concerne un procédé de fabrication de boulettes de fibres de bois, comprenant une étape d'obtention de fibres de bois par défibrage de pièces de bois à la vapeur et une étape de traitement des fibres de bois à l'issue de laquelle sont obtenues les boulettes, cette étape de traitement comportant une phase d'entraînement des fibres de bois dans un tambour rotatif.

La demande de brevet FR 2 193 350 mentionne un procédé d'obtention d'agrégat de fibres, par exemple des fibres de bois, dans lequel le traitement des fibres comprend une phase de traitement à sec au cours de laquelle les fibres sont disposées dans un tambour qui tourne jusqu'à les conduire à constituer des agrégats fibreux peu cohérents. Cette phase de traitement à sec est suivie par une phase de traitement par vecteur liquide, au cours de laquelle les agrégats fibreux sont mis en suspension dans un liquide et soumis à une rotation, éventuellement combinée à une pulsation, de manière à consolider ces agrégats.

FR 2 193 350 propose de modifier la phase de traitement par vecteur liquide, en remplaçant la mise en suspension des agrégats dans un liquide par une simple imprégnation de surface desdits agrégats par un liquide, par exemple de l'eau contenant un agent tensioactif et/ou un liant, qui a pour effet de resserrer les fibres et de consolider les agrégats.

Ce procédé donne globalement satisfaction, mais la nécessaire imprégnation des agrégats par un agent liquide le rend relativement coûteux et compliqué. De plus, on a constaté qu'une croûte a tendance à se former à la surface des granules obtenus, ce qui limite certaines de leurs propriétés, telles que leur capacité d'absorption d'eau ultérieure.

Les agrégats réalisés à partir de fibres de bois connaissent de nombreuses applications. Ils servent par exemple de substrat de culture, cette application mettant à profit leurs propriétés d'absorption d'eau et de restitution progressive de l'humidité. Par ailleurs, ces agrégats constituent un matériau léger qui peut être utilisé comme additif dans de nombreux produits.

La demande de brevet FR 2 776 470 propose un procédé permettant d'obtenir les agrégats fibreux en utilisant uniquement un traitement par voie sèche. Devant ce procédé, on remue les fibres dans une enceinte en atmosphère sèche jusqu'à les enrouler sur elles-mêmes en leur permettant de s'accrocher les unes aux autres. Ce procédé donne satisfaction pour de nombreuses applications et présente l'avantage d'être extrêmement bon marché. Il conduit à obtenir des pelotes de fibres entremêlées qui sont très aérées. Cette caractéristique est avantageuse pour certaines applications dans lesquelles on a besoin d'un matériau de très faible densité. Pour d'autres applications, les pelotes obtenues peuvent être considérées comme manquant de cohérence et comme étant trop aérées, permettant ainsi par exemple une évaporation trop rapide de l'humidité qu'elles contiennent.

Le besoin s'est donc fait sentir de mettre au point un procédé peu coûteux permettant la fabrication d'agrégats de fibres suffisamment denses pour constituer de réelles boulettes cohérentes, qui peuvent être manipulées et utilisées comme des granulés, sans présenter les inconvénients précités.

Ce but est atteint grâce au fait que l'étape de traitement des fibres de bois comprend, en outre, une phase de brassage des fibres réalisée avant la phase d'entraînement et au fait que ladite étape de traitement est un traitement par voie sèche n'utilisant aucun agent liquide.

Grâce à ces dispositions, on évite de recourir à une phase de traitement par vecteur liquide pendant l'étape de traitement des fibres de bois, c'est-à-dire qu'il n'est pas nécessaire de mouiller les fibres après leur sortie du défibreur, de sorte que le procédé est à la fois peu coûteux, rapide et aisé à mettre en oeuvre. On a constaté que, par rapport aux procédés utilisant le traitement par vecteur liquide, le procédé de l'invention nécessite environ 20 % d'énergie en moins, tandis que sa durée est réduite d'environ 30 %. De plus, les boulettes de fibres obtenues en mettant en oeuvre le procédé de l'invention ne présentent aucune croûte de surface. Elles sont plus régulières en taille que les agrégats obtenus par les procédés antérieurs ; elles sont également moins compactes (tout en ayant une cohésion supérieure à celle des agrégats fibreux obtenus par le procédé de FR 2 776 470) et plus absorbantes. Ces boulettes de fibres conviennent à de très nombreuses applications, par exemple comme matériaux absorbants de liquides (liquides industriels, utilisation dans des cuisines ou des abattoirs) ou encore comme matériaux isolants, thermiques ou phoniques.

La demanderesse a eu l'idée de réaliser une phase de brassage des fibres entre leur sortie du défibreur et leur entrée dans le tambour rotatif et a constaté que cette phase permettait de créer des "pré-agrégats" de fibres qui, après leur passage dans le tambour rotatif, se présentent comme de véritables boulettes dont la structure est cohérente. En particulier, lorsque ces boulettes sont imprégnées de liquide, leur volume augmente mais elles continuent de se présenter sous la forme de boulettes distinctes les unes des autres, sans que leur structure soit détruite.

Pour certaines applications, il est nécessaire d'adjoindre aux fibres un adjuvant chimique, leur confiant certaines propriétés. Il s'agit par exemple d'un engrais de culture, d'un sel, d'un agent anticryptogame, d'un agent hydrofugeant ou d'un agent ignifugeant. Selon l'invention, cet adjuvant est ajouté aux fibres pendant l'étape de défibrage. La vapeur utilisée pendant le défibrage est très avantageusement utilisée comme un vecteur qui favorise la mise en contact de l'adjuvant avec le bois.

Les boulettes finalement obtenues se trouvent ainsi intimement imprégnées de l'adjuvant. De plus, celui-ci n'étant pas ajouté lors du traitement à sec, il ne peut causer aucune croûte à la surface des boulettes.

Les boulettes obtenues à l'aide du procédé de l'invention se présentent sous la forme de petites sphérules ou de petites pelotes comprenant des fibres extrêmement fines, dont l'épaisseur est tout au plus de l'ordre du dixième de millimètre, tandis que leur longueur est de l'ordre de 1 à 3 mm. De même, le diamètre des sphérules est lui-même de l'ordre de 1 à 3 mm.

L'invention concerne également une installation de fabrication de boulettes de fibres de bois, comprenant un dispositif de défibrage de pièces de bois à la vapeur, un tambour rotatif et des moyens de convoyage aptes à transporter les fibres de bois entre le dispositif de défibrage et ce tambour.

Dans l'art antérieur évoqué précédemment, les installations utilisées pour la fabrication d'agrégats de fibres de bois comprenaient des moyens de traitement par vecteur liquide, utilisant une cuve de suspension de fibres animée d'un mouvement de rotation, éventuellement combiné à une pulsation. De telles cuves sont coûteuses et leurs moyens de mise en mouvement sont complexes. Dans d'autres installations, le traitement par vecteur liquide nécessitait des moyens pour déposer un liquide à la surface des agrégats à l'issu de leur traitement à sec. On a évoqué précédemment les inconvénients que présentent les agrégats de fibres fabriqués dans de telles installations.

L'invention vise à proposer une installation simple et peu coûteuse pour fabriquer des fibres sensiblement exemptes de cet inconvénient.

Ce but est atteint grâce au fait que l'installation comporte, en outre, une enceinte contenant un rotor de brassage et au fait que les moyens de convoyage sont aptes à faire passer les fibres de bois dans ladite enceinte lors de leur transport entre le dispositif de défibrage et le tambour rotatif.

Dans l'installation de l'invention, l'enceinte de brassage est interposé entre le dispositif de défibrage et le tambour rotatif. Les moyens de convoyage sont réglés pour que, au cours de leur transport entre le dispositif de défibrage et le tambour, les fibres restent suffisamment de temps dans l'enceinte de brassage pour en ressortir sous une forme qui favorisera leur agrégation dans le tambour rotatif.

Les moyens de convoyage peuvent comprendre une première vis sans fin transportant les fibres du dispositif de défibrage jusqu'à l'entrée de l'enceinte de débrassage et une deuxième vis sans fin reprenant les fibres à leur sortie de l'enceinte de brassage et les transportant jusqu'à l'entrée du tambour rotatif. Ils peuvent également comprendre un système de transport en continu fonctionnant par exemple par air pulsé.

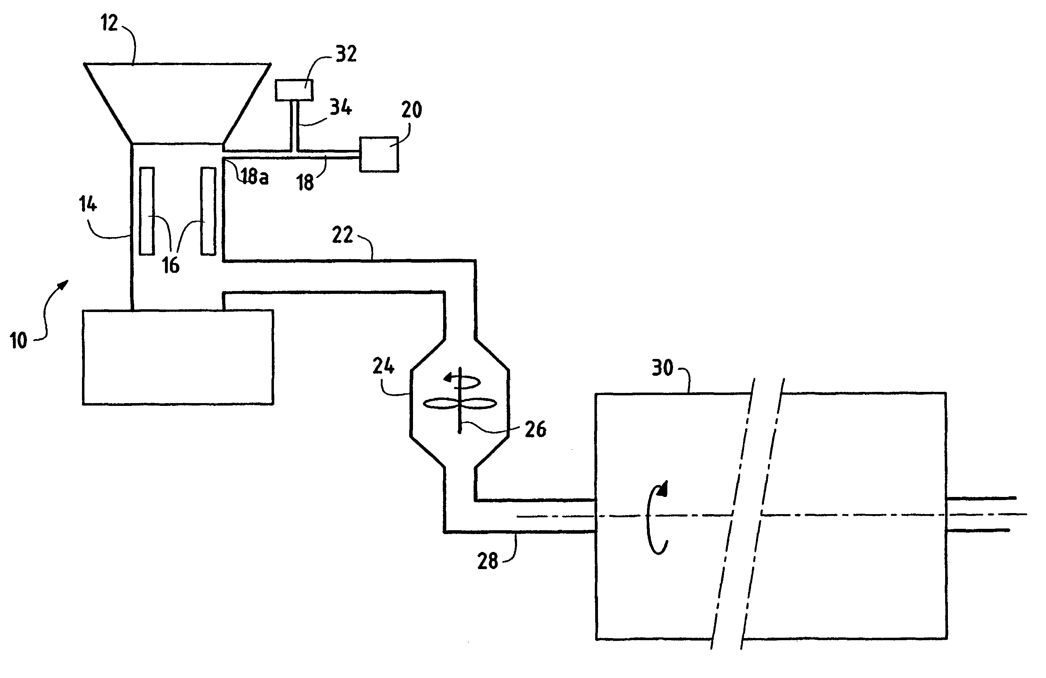

L'invention sera bien comprise et ses avantages apparaîtront mieux à la lecture de la description détaillée qui suit, d'un mode de réalisation représenté à titre d'exemple non limitatif. La description se réfère à la figure unique annexée montrant schématiquement une installation conforme à l'invention.

Cette installation comporte un dispositif de défibrage 10 ayant une trémie 12 dans laquelle sont déversées des pièces de bois à défibrer, se présentant par exemple sous la forme de petits morceaux ou de copeaux. Ces copeaux entrent ensuite dans la chambre de défibrage 14 dans laquelle ils sont défibrés par l'action de disques 16 rotatifs et mis en appui l'un sur l'autre. La position de ces disques est représentée de manière schématique.

Le défibrage se réalise dans une ambiance saturée en vapeur d'eau, la vapeur étant injectée, par exemple en partie haute de la chambre de défibrage 14, par une entrée d'injection 18A reliée à une conduite d'injection 18, elle-même alimentée en vapeur par un générateur de vapeur 20.

Une fois obtenues par l'action de défibrage des disques 16, les fibres sortent de la chambre de défibrage 14 par une conduite de transport 22. Cette conduite transporte les fibres jusqu'à une enceinte de brassage 24 dans laquelle se trouve un rotor de brassage 26, par exemple constitué par des pales entraînées par un arbre tournant. Après avoir subi une phase de brassage dans cette enceinte 24, les fibres sont transportées par une conduite 28 jusqu'à un tambour rotatif 30. Ce tambour tourne autour d'un axe horizontal à une vitesse de rotation de l'ordre de, par exemple, 10 à 50 tr/min.

La durée de la phase de brassage est généralement de 1 min à 10 min, de préférence de l'ordre de 1 min à 3 min. Le transport des fibres peut être continu, auquel cas la vitesse de transport est réglée, en fonction du volume de l'enceinte 24, pour que les fibres restent une durée suffisante dans cette enceinte.

De son côté, le rotor de brassage 26 tourne autour d'un axe qui est avantageusement vertical. Sa vitesse de rotation est avantageusement comprise entre 300 et 500 tr/min.

Les moyens de convoyage sont par exemple réglés de telle sorte que les fibres de bois sortant du défibreur occupent environ un tiers du volume intérieur de l'enceinte 24. Elles sont brassées dans cette enceinte par l'action du rotor 26 qui commence à les agréger les unes aux autres, l'agrégation étant terminée dans le tambour 30.

Les pièces de bois utilisées présentent initialement un certain taux d'humidité, par exemple de l'ordre de 10 à 15% en masse. Du fait de l'injection de vapeur lors du défibrage, les fibres sortant du dispositif de défibrage présentent un taux d'humidité plus élevé, par exemple de l'ordre de 20 à 50 % en masse.

La phase de brassage est réalisée à une température ambiante, par exemple de l'ordre de 10°C à 40°C. La durée de stationnement des fibres de bois dans l'enceinte 24, la température de ladite enceinte et la vitesse de rotation de son rotor sont avantageusement réglées de telle sorte que, en sortie de l'enceinte de brassage, le taux d'humidité des fibres a été ramené à une valeur tout au plus sensiblement égale à environ 15 % en masse.

Avantageusement, l'installation comprend des moyens pour introduire au moins un adjuvant à l'intérieur du dispositif de défibrage 10. Plus précisément, cet adjuvant est introduit à l'intérieur de l'enceinte de défibrage 14. Comme indiqué précédemment, la vapeur est avantageusement utilisée comme vecteur pour la mise en contact de l'adjuvant avec le bois.

Elle est de même avantageusement utilisé pour l'injection de cet adjuvant. En effet, celui-ci peut être injecté directement dans la conduite 18, et peut alors entrer dans le dispositif de défibrage par l'entrée de vapeur 18A. Par exemple, le ou les adjuvants, initialement contenus dans un réservoir 32, sont injectés dans la conduite 18 jusqu'à l'entrée 18A par une conduite 34.

## Revendications

1. Procédé de fabrication de boulettes de fibres de bois, comprenant une étape d'obtention de fibres de bois par défibrage de pièces de bois à la vapeur et une étape de traitement des fibres de bois à l'issue de laquelle sont obtenues les boulettes, cette étape de traitement comportant une phase d'entraînement des fibres de bois dans un tambour rotatif (30),
**caractérisé en ce que** l'étape de traitement des fibres de bois comprend, en outre, une phase de brassage des fibres réalisée avant la phase d'entraînement et **en ce que** ladite étape de traitement est un traitement par voie sèche n'utilisant aucun agent liquide.

2. Procédé selon la revendication 1, **caractérisé en ce que** l'étape de défibrage comprend l'utilisation d'au moins un adjuvant.

3. Procédé selon la revendication 2, **caractérisé en ce que** la vapeur est utilisée comme vecteur pour la mise en contact de l'adjuvant avec le bois.

4. Procédé selon la revendication 2 ou 3, **caractérisé en ce que** l'adjuvant est choisi parmi les engrais de culture, les sels, les agents anti-cryptogames, les agents hydrofugeants et les agents ignifugeants.

5. Procédé selon l'une quelconque des revendications 1 à 4, **caractérisé en ce que** la phase de brassage est réalisée à une température de 10°C à 40°C.

6. Procédé selon l'une quelconque des revendications 1 à 5, **caractérisé en ce que**, à l'issue de la phase de brassage, les fibres présentent un taux d'humidité au plus sensiblement égal à 15 % de leur masse totale.

7. Installation de fabrication de boulettes de fibres de bois, comprenant un dispositif (10) de défibrage de pièces de bois à la vapeur, un tambour rotatif et des moyens de convoyage (22, 28) aptes à transporter les fibres de bois entre le dispositif de défibrage (10) et ce tambour (30),
**caractérisée en ce qu'**elle comporte, en outre, une enceinte (24) contenant un rotor de brassage (26) et **en ce que** les moyens de convoyage (22, 28) sont aptes à faire passer les fibres de bois dans ladite enceinte (24) lors de leur transport entre le dispositif de défibrage (10) et le tambour rotatif (30).

8. Installation selon la revendication 7, **caractérisée en ce que** le rotor de brassage (26) comporte des pales susceptibles d'être entraînées à une vitesse de rotation comprise entre 300 et 500 tr/mn.

9. Installation selon la revendication 7 ou 8, **caractérisée en ce qu'**elle comporte des moyens (32, 34) pour introduire au moins un adjuvant à l'intérieur du dispositif de défibrage (10).

10. Installation selon la revendication 9, **caractérisée en ce qu'**elle comporte une entrée de vapeur (18A) à l'intérieur du dispositif de défibrage (10) et **en ce que** les moyens (32, 34) pour introduire au moins un adjuvant à l'intérieur de ce dispositif sont raccordés à ladite entrée (18A).

## Patentansprüche

1. Verfahren zur Herstellung von Kugeln aus Holzfasern, das einen Schritt zum Erzeugen von Holzfasern durch Zerfasern von Holzstücken mit Dampf und einen Schritt zur Behandlung der Holzfasern umfaßt, nach dessen Ablauf man die Kugeln erhält, wobei dieser Behandlungsschritt eine Phase des Mitreißens der Holzfasern in einer Drehtrommel (30) umfaßt,
**dadurch gekennzeichnet, daß** der Schritt zur Behandlung der Holzfasern außerdem eine Phase des Rührens der Fasern umfaßt, die vor der Phase des Mitreißens durchgeführt wird, und dadurch, daß der Behandlungsschritt eine Behandlung im Trockenverfahren ist, bei der kein flüssiges Mittel verwendet wird.

2. Verfahren nach Anspruch 1, **dadurch gekennzeichnet, daß** der Schritt des Zerfaserns den Gebrauch mindestens eines Zusatzmittels umfaßt.

3. Verfahren nach Anspruch 2, **dadurch gekennzeichnet, daß** Dampf als Träger für das Herstellen des Kontakts des Zusatzmittels mit dem Holz verwendet wird.

4. Verfahren nach Anspruch 2 oder 3, **dadurch gekennzeichnet, daß** das Zusatzmittel unter Anbaudüngern, Salzen, antikryptogamen Mitteln, wasserabweisend machenden Mitteln und unbrennbar machenden Mitteln ausgewählt wird.

5. Verfahren nach einem der Ansprüche 1 bis 4, **dadurch gekennzeichnet, daß** die Rührphase bei einer Temperatur von 10 °C bis 40 °C erfolgt.

6. Verfahren nach einem der Ansprüche 1 bis 5, **dadurch gekennzeichnet, daß** die Fasern nach der Rührphase einen Feuchtigkeitsprozentsatz von höchstens in etwa 15 % ihrer Gesamtmasse aufweisen.

7. Anlage zur Herstellung von Kugeln aus Holzfasern, die eine Vorrichtung (10) zum Zerfasern von Holzstücken mit Dampf, eine Drehtrommel und Fördermittel (22, 28) umfaßt, die dazu geeignet sind, die Holzfasern zwischen der Zerfaserungsvorrichtung (10) und der genannten Trommel (30) zu transportieren,
**dadurch gekennzeichnet, daß** sie außerdem ein Behältnis (24) umfaßt, das einen Rührrotor (26) enthält, und dadurch, daß die Fördermittel (22, 28) dazu geeignet sind, die Holzfasern bei ihrem Transport zwischen der Zerfaserungsvorrichtung (10) und der Drehtrommel dieses Behältnis (24) durchlaufen zu lassen.

8. Anlage nach Anspruch 7, **dadurch gekennzeichnet, daß** der Rührrotor (26) Schaufeln umfaßt, die mit einer Drehzahl zwischen 300 und 500 U/min. angetrieben werden können.

9. Anlage nach Anspruch 7 oder 8, **dadurch gekennzeichnet, daß** sie Mittel (32, 34) zum Einführen mindestens eines Zusatzmittels ins Innere der Zerfaserungsvorrichtung (10) umfaßt.

10. Anlage nach Anspruch 9, **dadurch gekennzeichnet, daß** sie einen Eingang für Dampf (18A) ins Innere der Zerfaserungsvorrichtung (10) umfaßt, und dadurch, daß die Mittel (32, 34) zum Einführen mindestens eines Zusatzmittels ins Innere dieser Vorrichtung an den genannten Eingang (18A) angeschlossen sind.

## Claims

1. Method of manufacturing wood-fibre pellets, comprising a stage of obtaining wood fibres by grinding pieces of wood in steam and a stage of processing wood fibres, at the end of which the pellets are obtained, this processing stage comprising a phase of entraining wood fibres in a rotary drum (30),
**characterised in that** the stage of processing the wood fibres comprises, in addition, a phase of agitating the fibres which is carried out before the entrainment phase and **in that** said processing stage is a dry treatment which does not use any liquid agent.

2. Method according to claim 1, **characterised in that** the grinding stage includes the use of at least one additive.

3. Method according to claim 2, **characterised in that** the steam is used as a vector to bring the additive into contact with the wood.

4. Method according to claim 2 or 3, **characterised in that** the additive is selected from culture fertilisers, anti-cryptogam agents, water-repellent agents and fire-retardant agents.

5. Method according to any one of claims 1 to 4, **characterised in that** the agitating phase is realised at a temperature of 10°C to 40°C.

6. Method according to any one of claims 1 to 5, **characterised in that** at the end of the agitating phase, the fibres have a moisture content at the most substantially equal to 15% of their total mass.

7. Installation for manufacturing wood-fibre pellets, comprising a device (10) for grinding pieces of wood in steam, a rotary drum and conveying means (22, 28) capable of transporting the wood fibres between the grinding device (10) and this drum (30),
**characterised in that** it includes, in addition, an enclosure (24) containing an agitating rotor (26) and **in that** the conveying means (22, 28) are capable of making the wood fibres pass into said enclosure (24) as they are conveyed between the grinding device (10) and the rotary drum (30).

8. Installation according to claim 7, **characterised in that** the agitating rotor (26) comprises blades capable of being driven at a speed of between 300 and 500 rpm.

9. Installation according to claim 7 or 8, **characterised in that** it includes means (32, 34) for introducing at least one additive into the grinding device (10).

10. Installation according to claim 9, **characterised in that** it includes a steam inlet (18A) into the grinding device (10) and **in that** the means (32, 34) for introducing at least one additive into this device are connected to said inlet (18A).
